# EUROPEAN PATENT APPLICATION

(11) **EP 3 587 700 A1**
(43) Date of publication of application: **01.01.2020**
(21) Application number: 19181631.3
(22) Date of filing: 21.06.2019
(51) Int. Cl.: E04F 13/00, D06N 7/00, B32B 17/04, E04F 15/16

(54) **COATING SYSTEM FOR COATING A WALL AND/OR A FLOOR IN A WET ENVIRONMENT**

(30) Priority: 25.06.2018 IT 201800006616
(71) Applicant: Glamora S.r.l., 41049 Sassuolo (MO) (IT)
(72) Inventor: CASALI, Alberto, 41042 Roteglia (RE) (IT)
(74) Representative: Savini, Stefania

(57) **Abstract**

A coating system for coating a surface (2) of a wall (3) and/or of a floor of a wet environment comprising:
- a coating element (1) consisting of:
- a base layer (6) made of glass fibre;
- a decorative pattern (7) comprising a decoration to be made on an outer face of the base layer (6) to decorate a surface (2) of the wall (3) and/or of the floor; and
- a protective layer (8) arranged for making the coating element (1) impermeable to protect the decorative pattern (7), the wall (3) and/or the floor from chemical or mechanical actions,
the protective layer (8) consisting of a polyurethane film heat-sealed on the outer face of the base layer (6) decorated by the decorative pattern (7);
- and a self-sealing adhesive (10) that is applicable to the surface (2) and arranged for making said coating element (1) adhere to the surface (2) and for hermetically closing the joints between adjacent sheets (9) of the coating element (1).

## Description

The invention relates to a coating system for coating a wall and/or a floor of a wet environment, i.e. an environment that is in temporary contact with a liquid, such as water or water vapour, for example a bathroom, a wellness area, a kitchen, a laundry or the like.

In particular, the invention relates to a coating system intended for conferring on the wall and/or the floor of the wet environment in which it is installed a desired decoration and simultaneously ensuring that water does not penetrate below a surface of the wall and/or of the floor coated by the coating system according to the invention. In other words, the invention relates to an impermeable and decorative coating system.

From the prior art, coating systems are known that are intended to coat a wall and/or a floor of a wet environment comprising a coating element provided with a decorated layer with a pattern intended for conferring on the wall and/or on the floor the desired appearance and provided with an impermeable layer intended to prevent water being able to infiltrate into the wall and/or into the floor. The impermeable layer is applied to the decorated layer after the latter has been installed on the wall or on the floor.

One drawback of the coating systems for a wall and/or floor of known type is that the application of the impermeable layer necessitates great installation time and costs, inasmuch as the impermeable layer of the prior art coating elements is formed by applying two-component chemical painting in different cycles after hours or even days from one another. This makes the installation of the coating element laborious and the costs of installation very high because the workers who have to install the coating element inside a worksite, even for coating wall and/or floor surfaces of just a few metres, may have to spend the night near the worksite to complete the installation cycle on subsequent days.

Another drawback of the coating systems for a wall and/or floor of known type is that the impermeable layer of the coating element has to be applied only after the coating element has been installed on the wall or on the floor. In fact, known coating elements cannot be made in a finished product.

One object of the invention is to improve the coating systems for a wall and/or floor of known type.

Another object of the invention is to provide a coating system for a decorative and impermeable wall and/or floor that provides simple, fast and cheap installation.

A further object of the invention is to provide a decorative and impermeable coating element for wall and/or floor of a coating system that can be manufactured in a finished product that can be applied to the wall and/or floor by an adhesive without further steps having to be provided on site during laying to complete the installation.

A still further object of the invention is to provide a coating element that can still be installed on another pre-existing coating element on the wall and/or floor without the need to perform a removal operation for removing this other coating element.

The objects mentioned above and still others are achieved with a coating system according to one or more of the claims below.

Owing to the invention, it is possible to make a coating system for a decorative and impermeable wall and/or floor. The coating system is provided with a coating element that is ready to be applied. The decorative and impermeable coating element according to the invention is supplied in a finished product so as to speed up installation thereof on the wall and/or on the floor and reduce the installation cost thereof. The coating system is further provided with a self-sealing adhesive that ensures the adhesion and seal of the coating element on the wall and/or on the floor and ensures the sealing of the joints between the sheets of adjacent coating elements.

The coating system according to the invention is easy to make and can be installed simply and easily by an operator.

The invention can be better understood and implemented with reference to the attached drawings that illustrate a non-limiting embodiment thereof, in which:

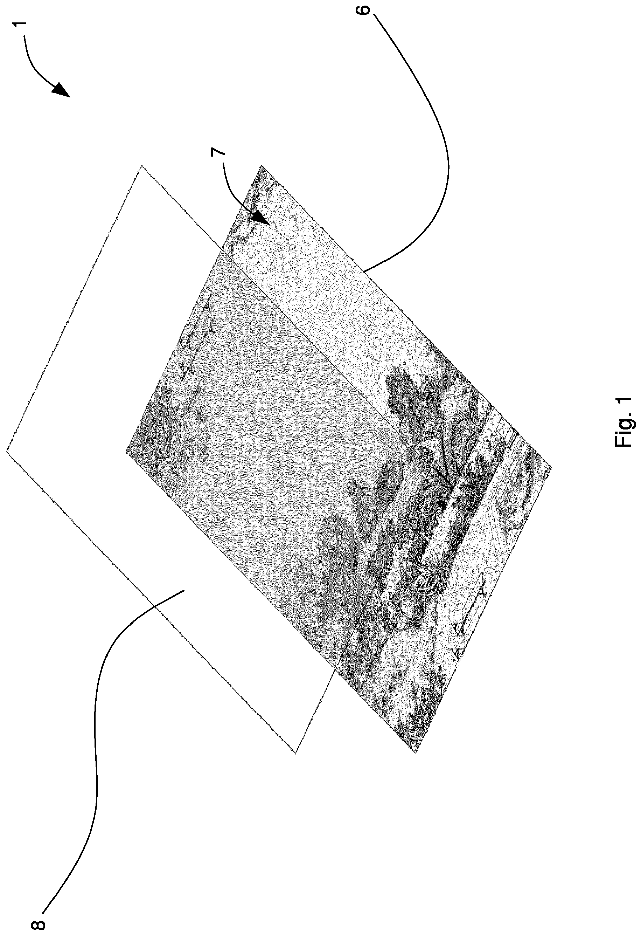

Fig. 1 is a perspective and exploded view of a coating element of a coating system according to the invention intended to coat a wall and/or a floor of a wet environment;
Fig. 2 is a perspective and exploded view of the coating element of Figure 1 intended to coat a wall or a floor of a wet environment.

With reference to the aforesaid Figures, with 100 a coating system according to the invention has been indicated overall and with 1 a coating element is indicated for a wall and/or floor with which the coating system 100 is provided.

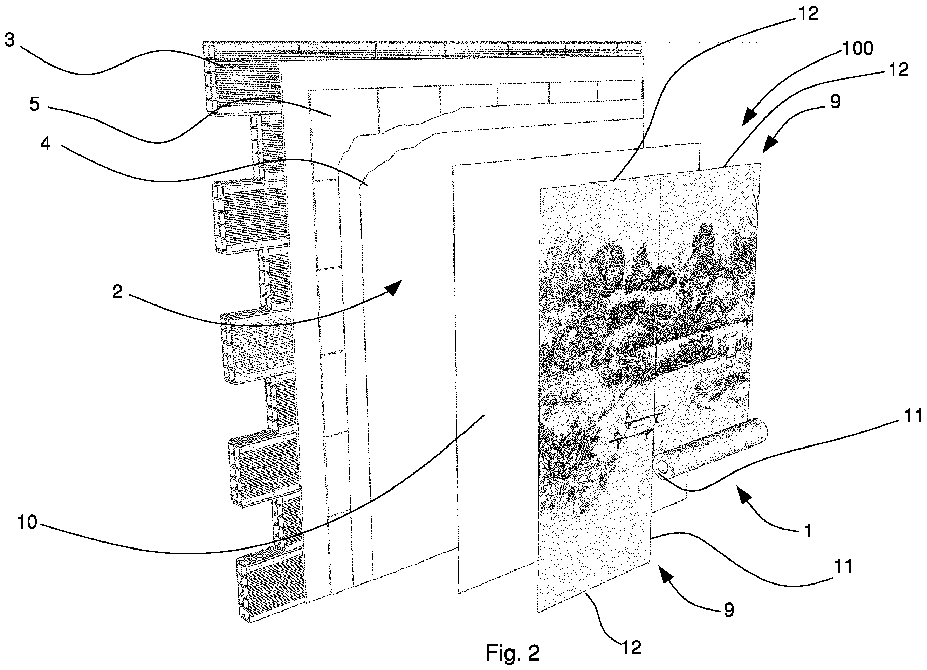

With particular reference to Figure 2, the coating element 1 according to the invention is intended to coat a surface 2 of a wall 3 and/or of a floor of a wet environment, to confer on the wall 3 and/or on the floor a desired decoration and to avoid a liquid, like water, or water vapour, being able to penetrate the wall 3 and/or the impermeable floor.

A wet environment means an environment, in particular an environment inside a building, which environment is provided with the aforesaid wall 3 and/or with the aforesaid floor and is intended to be in contact with a liquid, in particular water, or water vapour. A wet environment can be, for example, a bathroom, a shower cubicle, a room of a wellness area, a kitchen, a laundry or the like.

The surface 2 can be a surface of a plaster 4, for example a smooth cement-based plaster, as illustrated in Figure 2.

Alternatively, the surface 2 can be a surface of a ceramic cladding 5, for example consisting of a plurality of ceramic products like tiles, of any shape, dimension and type, devoid of any coat on the surface exposed to the wet environment.

The coating element 1 is provided with a base layer 6 made of glass fibre.

The base layer 6 is made in the form of a film.

The base layer 6 has in fact a thin thickness, for example less than 0.4 mm, in particular less than 0.27 mm. This makes the base layer 6 particularly flexible.

The glass fibre can be made in the form of a woven or nonwoven fabric.

The basis weight of the base layer 6 is comprised between 170 and 230 g/m², in particular it can be 200 g/m².

The glass fibre fabric of which the base layer 6 can be made comprises a number of threads comprised between 80 and 82 a decimetre for the warp, in particular equal to 81 threads a decimetre for the warp, and a number of threads comprised between 49 and 51 a decimetre for the weft, in particular equal to 50 threads a decimetre for the weft.

The base layer 6, owing to the presence of the glass fibre of which it is made, confers on the coating element 1 significant strength of materials, in particular significant tensile strength. For example, the tensile strength of the warp can be 600N/5cm as a mean value and the tensile strength of the weft can be 1000N/5cm as a mean value. This makes the base layer 6 easy to convey and handle without danger that it may break, thus preventing the formation of cracks, tears, clefts or splits. Further, it confers on the coating element 1 significant resistance to shock from impacts, rubbings and trample.

The base layer 6, again owing to the presence of the glass fibre of which it is made, is a good thermal insulator and has good flame resistance.

The coating element 1 further comprises a decorative pattern 7, arranged for conferring a desired decoration on the wall 3 and/or on the floor of the wet environment in which the coating element 1 is applied. The decorative pattern 7 comprises a decoration, which is for example achieved by digital printing. In other words, the decorative pattern 7 is configured to make the coating element 1 decorative.

The decorative pattern 7 is made on an outer face of the base layer 6 facing in use, or after the coating element 1 has been installed, the wet environment and not the wall 3 and/or the floor. This enables the decoration to be visible to a user transiting in the wet environment.

The coating element 1 further comprises a protective layer 8 arranged for protecting both the decorative pattern 7 and the surface 2 to which the coating element 1 is applied.

In particular, the protective layer 8 is applied to the decorative pattern 7 in order to ensure that water does not penetrate below the surface 2 of the wall 3 and/or of the floor coated by the coating element 1. In other words, the protective layer 8 is configured to make the coating element 1 impermeable and consequently to enable the surface 2 to which the coating element 1 is applied to be made resistant to water.

Further, the protective layer 8 is suitable for conferring significant mechanical strength to the surface 2 to which the coating element 1 is applied.

The protective layer 8 is arranged so as to coat completely the decorative pattern 7, so that neither the latter nor the elements therebelow comes/come into contact with the water that may be present in the wet environment.

The protective layer 8 is made in the form of a film.

The protective layer 8 has in fact a thin thickness, for example of 0.13 mm. This makes the protective layer 8 particularly flexible.

The protective layer 8 consists of a film of plastics, in particular of polyurethane.

During manufacture of the coating element 1, the protective layer 8 is heat-sealed on the outer face of the base layer 6 provided with the decorative pattern 7. Heat-sealing the impermeable layer to the base layer 6 decorated with the decorative pattern 7 enables the layers of the coating element 1 to be fixed firmly to one another. Heat-sealing the protective layer 8 to the base layer 6 decorated with the decorative pattern 7 can be achieved by hot-pressing or by a bending machine, for example in operating temperature conditions of 140° C, 6 bar pressure and a duration of about 20 s. Alternatively, heat-sealing the protective layer 8 on the base layer 6 decorated with the decorative pattern 7 can be achieved by a heat-sealing machine, for example in operating temperature conditions comprised between 360° and 400° C, about 0.30 bar pressure and advancement speed of the protective layer 8 and of the base layer 6 (decorated with the decorative pattern 7) to be sealed in the heat-sealing machine comprised between 1.5 and 2 m/minute.

The basis weight of the protective layer 8 can be 150 g/m2.

The protective layer 8 is transparent, this making the decorative pattern 7 visible to the user transiting in the wet environment.

Owing to the polyurethane film, the protective layer 8 is resistant to water. This makes the coating element 1 impermeable, i.e. the protective layer 8 prevents the water and/or the humidity penetrating the wall 3 and/or the floor.

Further, still owing to the polyurethane film, the protective layer 8 is resistant to chemical actions, in particular it is resistant to chemical agents such as detergents, alcohol, ammonia or the like, used for cleaning wet environments such as wet domestic environments.

Also, owing to the polyurethane film, the protective layer 8 is resistant to mechanical actions such as impacts, rubbings, trample, so as to prevent scratches and abrasion forming.

The protective layer 8 thus enables significant surface mechanical strength to be conferred to the coating element 1 against chemical or mechanical actions that are potentially able to damage the decorative pattern 7 below the protective layer 8 or the wall 3 and/or the floor to which the coating element 1 can be applied.

The coating element 1 is made of a sheet, inasmuch as arising from the union of the protective layer 8, made in the form of a film, and of the base layer 6, made in the form of a film, decorated with the decorative pattern 7 which, in particular when it is achieved by a digital printer, has a negligible thickness. The thickness of the coating element 1 can be for example 0.4 mm. Consequently, the coating element 1 is extremely flexible and compact. This enables the coating element 1 to be rolled up to be conveyed easily.

The coating element 1 can be made as a single sheet 9 or as a plurality of sheets 9 to be coupled with one another for coating the wall 2 or a part thereof. Each sheet 9 can have a rectangular shape. In Figure 2, two sheets 9 of the coating element 1 are shown, that are installed next to one another, for example along a respective first side 11, for example a long side of a sheet 9 when the latter has a plan rectangular shape. The coating element 1 can thus consist of a plurality of adjacent sheets 9.

The basis weight of the coating element 1 is comprised between 320 g/m² and 380 g/m², in particular can be 350 g/m². Consequently, the coating element 1 is extremely light, easy to transport and handle.

The coating element 1, further, owing to the base layer 6 made of glass fibre, has significant materials strength properties, in particular it is provided with significant tensile strength, which enables the formation of cracks, tears, clefts or splits to be avoided.

Also, the coating element 1, owing to the protective layer 8, is impermeable and enables it to be avoided that a liquid, such as water present in the wet environment, for example in the form of water vapour or detergent substances used for cleaning the coating element 1 can penetrate below the protective layer 8. This enables both the decoration of the decorative pattern 7 and the wall 3 and/or the floor to be protected from such liquids.

Lastly, owing to the decorative pattern 7, the coating element 1 enables the desired appearance to be conferred on the surface 2. The decorative pattern 7 is easily customizable, owing to the possibility of being able to be obtained by a digital printer.

The coating element 1 according to the invention is a finished product, ready to be installed.

Preferably, the coating element 1 consists exclusively of the base layer 6, of the decorative pattern 7 and of the protective layer 8.

The method of manufacturing the coating element 1 comprises the steps of:
- providing a fabric base layer 6 made of glass fibre;
- decorating an outer face of the base layer 6 with a decorative pattern 7, for example printing with a digital printer a pattern or a design on the base layer 6;
- heat sealing a protective layer 8 on the outer face of the base layer 6 decorated by the decorative pattern 7.

The coating system 100 further comprises an adhesive 10 arranged for affixing the coating element 1 to the surface 2. In Figure 2, in particular, the application of a layer of adhesive 10 is shown. The adhesive 10 can comprise a bonding agent and a sealant, or can consist of a self-sealing adhesive. The bonding agent is arranged for making the coating element 1 adhere to the surface 2 and the sealant is arranged for closing hermetically the joints between the adjacent sheets 9. The self-sealing adhesive performs the functions that the bonding agent and the sealant perform singly, i.e. guarantees simultaneously adhering of the coating element 1 to the surface 2 of the wall 3 and/or of the floor and the seal of the joints between the sheets 9 of adjacent coating elements 1.

The coating element 1 and the adhesive 10 define the coating system 100 for coating the surface 2 of the wall and/or of the floor.

The bonding agent, or the self-sealing adhesive, can be a starch-based paste adhesive.

The sealant, or the self-sealing adhesive, can be a base of modified silane polymers.

The self-sealing adhesive is devoid of easily flammable solvents. Further, the self-sealing adhesive does not contain water.

In use, the coating element 1 can be installed directly on the surface 2, in particular when the surface 2 is smooth and flat. This enables an operation of removing a pre-existing covering, like the ceramic cladding 5, to be performed.

The installation of the coating element 1 provides for the bonding agent (or the self-sealing adhesive) to be applied, for example by means of a brush, or a roller or a spatula to the surface 2. After this, a first sheet 9 of coating element 1 can be applied to the bonding agent (or to the self-sealing adhesive) immediately after spreading of the latter. If other sheets 9 have to be applied, the other sheets 9 are then laid one at a time and in succession on the bonding agent (or on the self-sealing adhesive), such that the sheets 9 are adjacent to one another along respective sides of each sheet 9, for example the long sides. Subsequently, it is possible to apply the sealant (or the self-sealing adhesive). The sealant (or the self-sealing adhesive) can be used to seal, i.e. assure a hermetic seal that is suitable for preventing the passage of water, vapour, gas, dust, the joints between the adjacent sheets 9. Further, sealant (or the self-sealing adhesive) can be used to seal the sides of the sheets 9 that do not face other sides of subsequent sheets 9. Such sides comprise second sides 12 of the plurality of adjacent sheets 9 the second sides 12 of which make an end edge of the coating element 1 when installation of the latter has terminated. For example, when the sheets 9 have a rectangular plan shape and are placed adjacent by the long sides, the second sides 12 are the short sides.

The self-sealing adhesive ensures the adhesion and the seal of the coating element 1 to the wall 2 and/or to the floor and ensures the seal of the joints between sheets 9 of adjacent coating elements 1.

The installation of the coating element 1 is thus very simple, fast and cheap. In fact, the coating element 1 is a finished product and ready to be applied to the wall 3 and/or to the wall by an adhesive 10 without it being necessary to perform further steps on site during applying of the coating element 1 to complete the installation.

Alternatively, as illustrated in Figure 2, a smooth plaster 4 can be applied to the ceramic cladding 5 arranged for obtaining a regular, i.e. smooth and flat surface.

The impermeable and decorative coating system 100 according to the invention possesses resistance that is identical to that of a ceramic wall tile with the thickness, the lightness and the flexibility of a fabric.

## Claims

1. Coating system for coating a surface (2) of a wall (3) and/or of a floor of a wet environment comprising:
- a coating element (1) consisting of:
- a base layer (6) made of glass fibre;
- a decorative pattern (7) comprising a decoration to be made on an outer face of said base layer (6) to decorate a surface (2) of said wall (3) and/or of said floor; and
- a protective layer (8) arranged for making impermeable said coating element (1) to protect said decorative pattern (7), said wall (3) and/or said floor from chemical or mechanical actions,
said protective layer (8) consisting of a polyurethane film heat-sealed on said outer face of said base layer (6) decorated by said decorative pattern (7);
- and a self-sealing adhesive (10) that is applicable to said surface (2) and arranged for making said coating element (1) adhere to said surface (2) and for hermetically closing the joints between adjacent sheets (9) of said coating element (1).

2. Coating system for coating a surface (2) of a wall (3) and/or of a floor of a wet environment according to claim 1, wherein said self-sealing adhesive (10) is based on modified silane polymers.

3. Coating system for coating a surface (2) of a wall (3) and/or of a floor of a wet environment according to claim 1 or 2, wherein said base layer (6) made of glass fibre is a fabric made of glass fibre.

4. Coating system for coating a surface (2) of a wall (3) and/or of a floor of a wet environment according to any preceding claim, wherein said decoration is made on said outer face of said base layer (6) by digital printing.

5. Coating system for coating a surface (2) of a wall (3) and/or of a floor of a wet environment according to any preceding claim, wherein said base layer (6) has a thickness that is less than 0.4 mm, in particular less than 0.27 mm.

6. Coating system for coating a surface (2) of a wall (3) and/or of a floor of a wet environment according to any preceding claim, wherein said protective layer (8) has a thickness of at least 0.13 mm.

7. Coating system for coating a surface (2) of a wall (3) and/or of a floor of a wet environment according to any preceding claim, wherein said base layer (6) has a basis weight comprised between 170 and 230 g/m², in particular it is 200 g/m².

8. Coating system for coating a surface (2) of a wall (3) and/or of a floor of a wet environment according to any preceding claim, wherein said protective layer (8) has a basis weight of 150 g/m².

9. Coating system for coating a surface (2) of a wall (3) and/or of a floor of a wet environment according to any preceding claim, wherein said coating element (1) has a thickness of 0.4mm and a basis weight of 350 g/m².
